# EUROPEAN PATENT SPECIFICATION

(11) **EP 4 420 514 B1**
(45) Date of publication and mention of the grant of the patent: **05.11.2025**
(21) Application number: 23157975.6
(22) Date of filing: 22.02.2023
(51) Int. Cl.: F16L 55/48, A01J 25/00, F16L 55/46, A23C 19/024, A23L 11/45

(54) **PIPING SYSTEM FOR CONTINUOUS PRODUCTION OF A PRECIPITATING FOOD**
ROHRLEITUNGSSYSTEM ZUR KONTINUIERLICHEN HERSTELLUNG EINES FÄLLUNGSNAHRUNGSMITTELS
SYSTÈME DE TUYAUTERIE POUR LA PRODUCTION CONTINUE D'UN ALIMENT CAPABLE DE PRÉCIPITATION

(43) Date of publication of application: 28.08.2024
(73) Proprietor: Züger Frischkäse AG Oberbüren, 9245 Oberbüren (CH)
(72) Inventor: Röllin, Walter, 9223 Schweizersholz (CH); Zellweger, René, 9213 Hauptwil (CH); Züger, Christoph, 9246 Niederbüren (CH); Zwyssig, Benjamin, 9525 Lenggenwil (CH)
(74) Representative: Kaminski Harmann

(56) References cited:
- DE-A1- 10 127 202
- US-A- 4 108 057

## Description

### FIELD OF THE INVENTION

The present invention relates to a piping system for continuous production of a precipitating food, in particular cheese and/or tofu, by precipitation of a first medium, in particular milk or other protein dispersions, of defined quantity, in particular of defined volume and/or defined mass, within the piping system.

### BACKGROUND OF THE INVENTION

In food industry, especially in cheese production, it is common practice to precipitate the milk by adding a precipitation medium such as citric acid or rennet and to separate the precipitated milk from the liquid whey after a certain incubation/interaction time. The precipitation of the milk is often carried out in a batch process, since the volume of milk and precipitation medium added to the reactor (e.g. stirred tank), which has a specific volume known in advance, can be dosed according to the desired mass of the cheese. In this way, the finished cheese has exactly the desired weight, which eliminates the need to cut the cheese and results in little or no food waste.

The disadvantages of cheese production in a batch process are, on the one hand, that it is an open system and thus germs or impurities (e.g. when adding/pouring the respective reactants) can enter the food product, and open heated systems are highly energy consuming compared to closed (and insulated) systems. On the other hand, that production must be stopped for each production step, which makes the batch process very labor- and time-intensive.

Cheese production in a continuous process by means of a piping system eliminates the above-mentioned disadvantages of the batch process, since on the one hand it is a closed system, which significantly improves, on the one hand, hygiene in that germs or impurities can no longer easily enter the system and thus the cheese and, on the other hand, energy efficiency. Furthermore, due to the mixing of reactants which have been fed into the piping system (e.g. milk and precipitation medium) during the flow through the piping system, a continuous process can be realized in which the production does not have to be interrupted for each work step or the reaction solution has to be decanted/transferred.

A disadvantage of such a continuous cheese production according to the prior art is the difficulty of precisely portioning the volume of milk flowing in the piping system and thus also the amount of precipitation medium required for precipitating the milk. It is therefore difficult to ensure that the milk has been completely precipitated in case the precipitation medium dosage is too low or that the cheese obtained has the desired weight. In the case of incomplete precipitation of the milk, the reaction product obtained cannot be further processed into cheese as desired and may have to be disposed of.

A significant disadvantage of continuous cheese production according to the prior art is the sedimentation of the precipitated milk (i.e. cheese curd flocs, which sediment in the liquid whey) over process and production time in the piping system. Such sedimentation leads to a very unstable volume flow of the precipitated milk or, in the worst case, results in a complete blockage of the pipeline. Additionally, sedimentation of the cheese curd in the pipeline results in not obtaining the desired amount of cheese per portion at the end of the production process, because parts of the cheese curd remain in the pipeline.

A further significant disadvantage of continuous cheese production is that for further downstream processing, cheese curd needs to be filled into cheese blocs, i.e. converting a continuous process to a semi-continuous process. In order to obtain uniform end products, cheese curd blocs need to be isovolumetric and therefore need to be portioned exactly according to their curd (precipitate) volume. Varying amounts of precipitated milk, resulting in cheese blocs of different sizes, impend further downstream processing (e.g. slicing) of the cheese. This potentially causes a relatively large amount of food waste.

The above-mentioned disadvantages of the prior art also occur in the continuous production of other food products that could be obtained by means of a precipitation reaction in a piping system, such as tofu.

US4108057A discloses a device for the continuous production of cheese material through coagulation of milk, comprising a horizontal trough-shaped container, a flexible inner wall covering the container wall on the inside, which inner wall can be displaced along the wall of the container, a device for feeding at the inlet end a predetermined amount of milk suitably pretreated for the manufacture of cheese, a transportation of such introduced milk from such inlet end to the outlet end by means of the flexible inner wall at such a velocity that during such a displacement inside the container the milk coagulates to a coagulate which can be cut and, further, comprising a cutting device at the outlet end of the container for cutting the coagulate to cheese curd.

### OBJECT OF THE INVENTION

For this reason, it is desirable to provide an improved piping system or method with which precipitating foods, in particular cheese and/or tofu, can be produced in a continuous process within the piping system, wherein the respective reactants, in particular milk or other protein dispersions, and a precipitation medium, can be precisely portioned.

It is therefore an object of the invention to provide a piping system and a method for continuous production of a precipitating food, in particular cheese and/or tofu, which overcome the disadvantages of the prior art.

This object is achieved by realizing at least part of the features of the independent claims. Features which further develop the invention in an alternative or advantageous manner are described in the dependent patent claims.

### SUMMARY OF THE INVENTION

The present invention relates to a piping system according to claim 1 for continuous production of a precipitating food, in particular cheese and/or tofu, by precipitation of a first medium, in particular milk or other protein dispersions, of defined quantity, in particular of defined volume and/or defined mass, within the piping system, said system comprising
- at least one pipeline having a defined diameter,
- at least two pigs configured to be moved in the at least one pipeline by a volumetric flow, in particular by a volumetric flow of the first medium, flowing in the at least one pipeline,
- a pig supply, the pig supply being configured to supply the at least two pigs into the at least one pipeline,
- a medium supply device, the medium supply device being configured to provide the first medium, in particular milk or other protein dispersions, of defined quantity, in particular of defined volume and/or defined mass, and a precipitation medium into the at least one pipeline, in particular into an intermediate pig volume, and
- a controller, the controller being configured to control the pig supply and/or the medium supply device so that
   - the at least two pigs are provided in the at least one pipeline with a defined first distance, wherein an intermediate pig volume between the at least two pigs is defined by the defined first distance and the defined pipeline diameter, and
   - the first medium and the precipitation medium are provided at least in the intermediate pig volume,
wherein by means of the precipitation medium the precipitation of the first medium, in particular milk or other protein dispersions, of defined quantity, in particular of defined volume and/or defined mass, is providable at least in the intermediate pig volume.

The defined first distance between the at least two pigs can be provided, for example, by the first of the at least two pigs passing the medium supply device which then supplies a previously set volume or mass (which accordingly also has a certain volume depending on the density of the first medium) of the first medium into the space/region/area/volume behind the first of the at least two pigs (which corresponds to the space/region/area/volume between the first of the at least two pigs and the second of the at least two pigs), whereby this supplied volume or mass of the first medium defines the intermediate pig volume. After complete supply of the previously set volume or mass of the first medium to the space behind the first of the at least two pigs, the pig supply supplies the second of the at least two pigs, whereby the intermediate pig volume (defined by the supplied volume or mass of the first medium) is now present between the at least two pigs. Since the at least one pipeline has a defined pipeline diameter and a defined intermediate pig volume is present between the first and the second of the at least two pigs, they consequently have a defined (first) distance to each other.

The defined first distance between the at least two pigs can also be provided, for example, by the first of the at least two pigs passing the medium supply device and then a previously set volume or a previously set mass of the first medium being supplied with a constant volume flow or constant mass flow into the space behind the first of the at least two pigs, whereby due to the constant volume flow or constant mass flow a defined (supply/dosage) time expires until the previously set volume or the previously set mass of the first medium has been completely supplied. After this defined time has expired the pig supply supplies the second of the at least two pigs, whereby defined by the constant volume or constant mass flow which has moved the first of the at least two pigs forward in the defined time, there is a defined (first) distance between the at least two pigs.

The term precipitation refers to the separation of a dissolved substance/component from a solution. The precipitation results in a precipitate in the form of, for example, amorphous flocs or a crystalline material. Basically, a phase transition of the previously dissolved substance takes place. Often these flocs enlarge on aging due to additional agglomeration. As a result, they can be filtered better or form a sediment. Agglomeration of the precipitate/flocs often further reduces their solubility.

The formation of the precipitate by precipitation can be caused, for example, by exceeding the solubility/solubility product of the substance due to changes in its environmental conditions (e.g. pH value or salt content), changes in temperature and pressure, evaporation of the solvent, changes in the polarity of the solvent or, for example, by additions of suitable substances (precipitants/precipitation medium). An added precipitation medium can, for example, become part of the precipitate or convert the dissolved substance into a less soluble one, or only change the solvent properties of the solvent. The liquid remaining is called the supernatant.

In other words, the term precipitation medium refers to a substance that causes a (chemical) reaction (precipitation reaction) in the medium to be precipitated, in this case the first medium (e.g. milk or other protein dispersions), whereby this first medium precipitates and forms, for example, flocs/flakes/pieces/curd. These flocs of the precipitated first medium float and/or sediment (depending on the density of the flocs) as a precipitate in the supernatant, also referred to as precipitation brine/precipitation permeate (or whey in case of milk). The flocs can agglomerate into increasingly larger flocs, thus forming increasingly larger pieces, up to whole blocks of precipitate. In order to then obtain the precipitated food, these blocks (which have formed from agglomerated flocs of the precipitated first medium) are separated from the precipitation brine/precipitation permeate (e.g. by filtering/decantation).

In the case of precipitation of milk (first medium) for cheese production, the precipitated milk (precipitated first medium) precipitates in the form of flocs, which sediment or float around in the liquid whey (precipitation brine/precipitated permeate). The flocs continue to agglomerate until whole cheese curd blocs are obtained, which float in the liquid whey.

It is clear to the skilled person that the term precipitation medium covers all substances that can be used for precipitation of the first medium, in particular milk or other protein dispersions.

The present invention has the advantage over prior art systems, in particular over discontinuous production in a batch process, that the precipitating food, in particular cheese and/or tofu, can be produced continuously. In this way, the production is significantly more work- and time-efficient, since the production does not have to be interrupted for individual working steps. Instead, there is an uninterrupted flow through the plant and the precipitating food is produced during this flow. Since the piping system can be controlled in its entirety by a control unit and the individual system components thus work synchronized with each other, it is not necessary to control each work step individually or even to carry it out manually. Furthermore, the piping system according to the invention enables a hygienic and simple production, since, on the one hand, a closed system is available and thus the entering of germs, impurities, etc. into the individual raw materials (first medium, precipitation medium, etc.) and into the precipitated food product is hindered/prevented and, on the other hand, the piping system is functional with a small number of components (e.g. pumps, valves, supply lines, electronic components, etc.). The closed system also reduces the energy consumption of the piping system according to the invention, since there is improved insulation in the closed system compared to an open system, particularly during heating or cooling processes in the system.

Another advantage of the piping system according to the invention is that the first medium is already correctly portioned with a defined quantity, in particular of defined volume and/or defined mass, in the at least one pipeline, in particular in the intermediate pig volume, and thus, on the one hand, the suitable dosage of the precipitation medium for complete precipitation of the first medium can be determined and, on the other hand, the product, i.e. the precipitating food, is obtained in the desired quantity (desired volume and/or desired mass). Thus, the production of the precipitating food is very resource-efficient, since it is obtained in the desired quantity (desired volume and/or desired mass) despite a continuous process and thus little food waste occurs.

Furthermore, the pigs that are moved through the piping system prevent (accumulated) sedimentation of the precipitated first medium (e.g. flocs, which sediment in the precipitation brine/precipitated permeate) over process and production time (for example, process time describes the time that passes until the raw materials have been transported from the beginning of the piping system to the end of the piping system and are available there as the product and production time describes the time from the start of production in the morning until the machines are shut down, for example in the evening) in the at least one pipeline. In case of the use of pigs, the precipitate accumulation/sedimentation regularly - within the intermediate pig volume - is pushed forward with the pigs and thereby, sediments such as protein agglomerates get pushed out. In addition, (solid) sedimentation on the pipeline wall (e.g. limestone/chalk, precipitated first medium from previous productions, etc.) is scraped off by the pigs, which provides a clearance/keeping free of the pipeline.

The advantages of the piping system according to the invention are to a certain extent dependent on the size and geometry of the pigs used. If, for example, the diameter of the pigs used is significantly smaller than the inner diameter of the pipeline, the first medium, which has been filled into the intermediate pig volume, for example, in a defined volume by means of the medium supply device, can flow through the gaps between the pipeline wall and the pigs. Thus, the first medium can flow out of the intermediate pig volume (there is less first medium than desired) and flow into another intermediate pig volume (the amount of first medium is undesirably increased there), whereby the desired portioning of the first medium is not achieved.

The removal of sediments from the pipeline wall is also not possible or only incomplete with a pig diameter significantly smaller than the inner diameter of the pipeline, since the pigs can flow/move over the sediments without scraping them off the pipeline wall or pushing them forward.

Consequently, it is particularly advantageous to select the diameter of the pig (or the diameter of the point of greatest expansion of the pig) so (for example, exactly or almost exactly as the internal diameter of the pipeline) that the pig seals the pipeline completely or almost completely (with respect to the exit of the first medium from the intermediate pig volume) and can also push away sedimentation completely or almost completely. It is not necessary that the diameter of the pig (e.g. by a lip fitted to the inner diameter of the pipeline) is exactly as large as the inner diameter of the pipeline (and thus touches the inner wall of the pipeline), since the desired portioning and removal of sedimentation may also work sufficiently well if the diameter of the pig (or the diameter of the point of greatest expansion of the pig) is slightly smaller than the inner diameter of the pipeline. It is clear to the skilled person how large he has to choose the diameter of the pig in order to achieve a sufficiently good sealing and/or removal of sediments.

The skilled person further knows that the pig can have different geometries (e.g. the pig is configured as a sphere, cylinder, dumbbell, lip pig, etc.), wherein it is only important that the pig has at least one point whose diameter provides the desired sealing and/or the desired removal of sedimentation.

In a further embodiment, the controller is configured to provide a constant volumetric flow, in particular a constant volumetric flow of the first medium, flowing in the at least one pipeline such that the defined first distance between the at least two pigs is maintained, in particular wherein the system further comprises at least one flow meter configured to determine the volumetric flow, in particular the volumetric flow of the first medium, in the at least one pipeline, and the controller is configured to provide the constant volumetric flow, in particular the constant volumetric flow of the first medium, based on the determination of the volumetric flow, in particular the volumetric flow of the first medium, by means of the flow meter.

This embodiment has the advantage that since the pigs are supplied into the at least one pipeline with the defined first distance from each other and are moved through the pipeline by the constant volumetric flow, in particular of the first medium, (and in doing so maintain the defined first distance from each other and thus also the intermediate pig volume), even if numerous pigs are present in the system (e.g. 5-15 pigs), the intermediate pig volume is equal for all pigs and thus (in case the first medium and the precipitation medium are supplied by the medium supply device into the at least one pipeline, in particular into the intermediate pig volume, in a constant manner for all pigs) the quantity, in particular volume and/or mass, of the first medium and/or of the precipitation medium in the intermediate pig volume is equal between all pigs.

In a further embodiment, the at least two pigs each comprising a pig body having a diameter smaller than the diameter of the at least one pipeline, and at least one lip, wherein the at least one lip extends radially from the pig body and has a diameter such that the at least one lip seals the at least one pipeline when present inside the pipeline.

As the at least one lip of the pig seals the at least one pipeline when present inside the pipeline, on the one hand the first medium and/or the precipitation medium cannot exit/leak out of the intermediate pig volume and on the other hand no further medium (e.g. further first medium) can enter the intermediate pig volume, which has the advantage that as soon as the first medium and/or the precipitation medium of defined quantity, in particular of defined volume and/or defined mass, are provided in the intermediate pig volume, these quantities remain the same during the passage through the piping system and thus the desired quantity of precipitated food is obtained in each case.

In a further embodiment, the precipitation of the first medium, in particular milk or other protein dispersions, of defined quantity, in particular of defined volume, is provided at least in the intermediate pig volume, while the at least two pigs move through the at least one pipeline by means of the volumetric flow, in particular by the volumetric flow of the first medium, flowing in the at least one pipeline.

This embodiment has the advantage that at the beginning of the piping system the first medium and the precipitation medium are provided at least in the intermediate pig volume and the precipitating food is formed while the pigs pass through the piping system, i.e. in a continuous process without stopping the production process, whereby at the end of the piping system (e.g. at an outlet/the product removal station configured as an opening in the at least one pipeline) the precipitating food is obtained.

In a further embodiment, the at least two pigs each comprising two lips, wherein the two lips extend radially from the pig body and have a diameter such that the two lips seal the at least one pipeline when present inside the pipeline.

This embodiment has the advantage that due to the two lips, of which preferably one is attached in the front area of the pig and one in the rear area of the pig, the at least one pipeline is sealed even more efficiently and furthermore, since two lips are pressed along/move along the wall of the pipeline, the wall of the pipeline can be cleared/freed of deposits/sedimentation more efficiently.

In a further embodiment, the two lips have a defined second distance from one another, wherein an intermediate lip volume is defined by the defined second distance and the defined pipeline diameter, in particular wherein the intermediate lip volume is configured to be filled with a second medium (before filling the intermediate pipeline volume), in particular with, for example, the first medium after removal of precipitates/precipitated flocs which can also be referred to as precipitation brine/precipitated permeate (e.g. liquid whey), of defined quantity, in particular of defined volume and/or defined mass (so that the intermediate lip volume is filled with the second medium, in particular with whey, to a filling level in the range between 80 % and 100 %).

This embodiment has the advantage that by filling the intermediate lip volume with the second medium, in particular with whey, the intermediate lip volume is deaerated (at a filling level of 100% the intermediate lip volume is completely deaerated). This deaeration helps to avoid turbulence when the pigs pass through the at least one pipeline, which can occur as soon as air is removed from the pipeline by, for example, filling the first medium into the pipeline. Turbulence leads to small particles, which lead to a loss of product recovery. This is prevented/reduced by filling the intermediate lip volume with the second medium, in particular with whey.

In a further embodiment, the pig supply is configured as a ramp on which the at least two pigs are applicable, wherein the at least two pigs are movable over the ramp in such a way that they can be introduced at the end of the ramp with the defined first distance into the at least one pipeline by means of a pig receiver.

In a further embodiment, the pig receiver is configured as an opening or a gate or a sluice or a valve.

These embodiments have the advantage that the pigs can be placed on the ramp without having to provide the first distance. The pigs move over/are transported over the ramp and thus reach the pig receiver, which ensures that the at least two pigs are introduced into the at least one pipeline with the defined first distance. The aim of the ramp is also to ensure that e.g. the first medium does not simply run out of the pipeline at the pig receiver, and thus the volumetric flow within the pipeline can be controlled or remains as desired/as set.

In a further embodiment, the system further comprises a first valve provided between the pig supply and the at least one pipeline, wherein by means of the first valve the introduction of the at least two pigs with the defined first distance into the at least one pipeline is providable, in particular wherein the controller is configured to control the first valve such that
- the first valve opens as soon as
   - one of the at least two pigs is provided for being supplied into the at least one pipeline, and/or
   - the medium supply device provided the defined quantity, in particular the defined volume and/or defined mass, of the first medium, in particular milk or other protein dispersions, into the at least one pipeline, in particular into the intermediate pig volume,
- the first valve closes again as soon as the pig provided for being supplied into the at least one pipeline has been moved through the opened first valve, and
- the first valve opens again as soon as
   - the medium supply device provided the defined quantity, in particular the defined volume and/or defined mass, of the first medium, in particular milk or other protein dispersions, into the at least one pipeline, in particular into the intermediate pig volume, and/or
   - the further one of the at least two pigs is provided for being supplied into the at least one pipeline, and/or
   - the distance between the at least two pigs corresponds to the defined first distance.

This embodiment has the advantage that by means of the first valve, on the one hand, the defined first distance between the at least two pigs can be accurately set and, on the other hand, that the desired quantity (e.g. volume) of the first medium has been supplied into the at least one pipeline, in particular into the intermediate pig volume. Furthermore, the first valve prevents (if desired) that a medium which is inside the at least one pipeline can exit the at least one pipeline when a pig is introduced and that a medium from the area in front of the first valve can enter the at least one pipeline.

In a further embodiment, the system further comprises
- a second valve provided between the first valve and the at least one pipeline, wherein the first and the second valve are configured to be distanced in such a way that a pig is receivable between the first and the second valve, and
- a first supply line, wherein the first supply line is configured to provide the second medium between the first and the second valve, in particular into the intermediate lip volume of the pig which is received between the first and the second valve,
   in particular wherein
- the controller is configured to control the second valve such that the second valve opens as soon as the medium supply device provided the defined quantity, in particular the defined volume and/or defined mass, of the first medium, in particular milk or other protein dispersions, into the at least one pipeline, in particular into the intermediate pig volume, and/or
- the controller is configured to control the second valve such that the second valve opens as soon as the intermediate lip volume of the pig, which is received between the first and the second valve, is filled with the second medium up to a desired filling level, and/or
- the pig filled with the second medium is configured to be moved through the opened second valve into the at least one pipeline.

This embodiment has the advantage that a pig can be received between the first and second valve and there the second medium can be precisely and easily filled into the intermediate lip volume of the pig without the second medium entering the at least one pipeline or exiting the piping system.

In a further embodiment, the medium supply device comprises a second supply line configured to provide the first medium, in particular milk or other protein dispersions, of a defined quantity, in particular of defined volume and/or defined mass, into the intermediate pig volume, in particular wherein the second supply line provides the first medium into the intermediate pig volume after at least one of the at least two pigs has been moved through the second valve.

This embodiment has the advantage that the first medium can be introduced into the intermediate pig volume easily, precisely and in the desired amount, wherein the first medium can be introduced into the intermediate pig volume after at least one of the at least two pigs has been moved through the second valve and thus the intermediate lip volume is already filled with the second medium.

In a further embodiment, the medium supply device comprises a third supply line configured to provide the precipitation medium into the intermediate pig volume, in particular wherein the third supply line provides the precipitation medium into the intermediate pig volume after at least one of the at least two pigs has been moved through the second valve.

This embodiment has the advantage that the precipitation medium can be introduced into the intermediate pig volume easily, precisely and in the desired amount, wherein the precipitation medium can be introduced into the intermediate pig volume after at least one of the at least two pigs has been moved through the second valve and thus the intermediate lip volume is filled with the second medium.

In a further embodiment, the precipitation medium is at least one of:
- citric acid, in particular an aqueous citric acid solution,
- rennet, in particular an aqueous rennet solution,
- magnesium salt, in particular an aqueous magnesium salt solution.

In a further embodiment, the controller is configured to provide a dosage of the precipitation medium in such a way, in particular by providing a constant volume flow of the precipitation medium in at least one of the supply lines, more particularly in the third supply line, that the quantity, in particular the volume and/or the mass, of the precipitation medium provided in the at least one pipeline, in particular into the intermediate pig volume, is adequate to precipitate the first medium of defined quantity, in particular of defined volume and/or defined mass.

This embodiment has the advantage that since the amount of first medium within the intermediate pig volume is defined and does not change as the pigs move through the piping system, the amount of precipitation medium required for complete precipitation of the first medium is determinable and thus the controller can control the volumetric flow of the precipitation medium such that the precipitation medium is provided into the intermediate pig volume in an amount which is adequate to precipitate the first medium of defined quantity.

In a further embodiment, the system further comprises a precipitation pipeline, configured to provide a pipeline in which the at least two pigs are movable for a defined time by means of the volumetric flow, in particular by means of the volumetric flow of the first medium, wherein in the defined time the first medium of defined quantity, in particular of defined volume and/or defined mass, precipitates within the intermediate pig volume.

In a further embodiment, the precipitation pipeline is configured as a pipeline comprising at least one, in particular several, turns in order to provide an increased pipe length at a reduced volume, in particular wherein at least a part of the precipitation pipeline are surrounded by an insulation which is configured to keep the temperature of the precipitation line and thus also of the first medium of defined quantity, in particular of defined volume and/or defined mass, constant, and/or a temperature regulator, wherein by means of the temperature regulator the precipitation pipeline and thus also the first medium of defined quantity, in particular of defined volume and/or defined mass, is coolable and/or heatable.

These embodiments have the advantage that the piping system can be extended by the precipitation pipeline in such a way (depending on the volumetric flow, in particular on the volumetric flow of the first medium, flowing in the at least one pipeline) that at the end of the piping system the first medium is completely precipitated (i.e. the precipitated first medium float and/or sediment (depending on the density) as precipitate in the precipitation brine/precipitated permeate (supernatant)) and thus the precipitating food is obtained.

Since precipitation is preferably carried out at higher temperatures, it is particularly advantageous that, for example, the precipitation pipeline and thus also the first medium can be heated up by means of the temperature regulator/controller. If, for example, an unbroken cold chain becomes relevant for the production of the precipitated food, it is particularly advantageous that, for example, the precipitation pipeline and thus also the first medium can be cooled by means of the temperature regulator.

The insulation serves for example to prevent the heated precipitation pipeline and thus also the heated first medium from cooling down again during the time in the precipitation pipeline (or heating up again in case of cooling down), which makes the heating (and/or cooling) system more energy efficient. Furthermore, the heating (and/or cooling) system and/or the insulation can set an optimal temperature for the precipitation reaction and keep it constant.

In a further embodiment, the system further comprises a product removal station configured to provide removal of precipitated first medium of defined quantity, in particular of defined volume and/or defined mass, from the piping system, in particular wherein the product removal station is configured as an opening in the at least one pipeline, wherein the opening has a size
- from which the precipitated first medium of defined quantity, in particular of defined volume and/or defined mass, is removable from the at least one pipeline, and
- which is smaller than the size of the at least two pigs (e.g. the opening has a smaller diameter than a pig configured as a sphere/ball), enabling the at least two pigs to be moved across the opening by means of the volumetric flow, in particular by means of the volumetric flow of the first medium,
   in particular wherein
- the opening is provided at the bottom of the at least one pipeline, enabling the precipitated first medium to fall out of the at least one pipeline by means of gravity, and/or
- the system further comprises a fluid supply line, in particular a water supply line, configured to provide a fluid flow, in particular a water flow, in the product removal station, wherein by means of the fluid flow, in particular the water flow, the precipitated first medium (which is present, for example, in the form of precipitated flocs / agglomerates of flocs in brine/permeate) of defined quantity, in particular of defined volume and/or defined mass, is flushable through the opening.

This embodiment has the advantage that the precipitated first medium (i.e. the precipitated flocs) can be easily removed (completely as possible) from the intermediate pig volume and from the piping system and can be easily separated from the pigs. In particular, the opening allows the precipitated first medium (i.e. the precipitated flocs) to simply fall out of the piping system by gravity, eliminating the need for additional components (e.g., slides, rakes, etc.). Due to the fluid flow, in particular the water flow, the reaction product (i.e. the precipated flocks of the precipitated first medium) can be flushed out of the piping system without residues.

In a further embodiment, the system further comprising a pig removal station configured to provide removal of the at least two pigs from the piping system, in particular wherein the pig removal station is configured as a third valve, and the controller is configured to control the third valve such that
- the third valve opens as soon as one of the at least two pigs is provided for removal from the piping system, wherein the pig provided for removal from the piping system is then movable through the opened third valve,
- the third valve recloses as soon as the pig provided for removal from the piping system has been moved through the opened third valve, and
- the third valve reopens as soon as the further one of the at least two pigs is provided for removal from the piping system.

In a further embodiment, the pig removal station is provided in the piping system subsequent to the product removal station.

These embodiments have the advantage that the pigs can be removed from the piping system without allowing any of the precipitated first medium (which is present, for example, in the form of precipitated flocs /agglomerates of flocs in brine/permeate) to exit the piping system at an undesired location. In particular, with an arrangement of the pig removal station subsequent to the product removal station, a pig can pass through the product removal station, especially over the opening, and then be removed from the piping system through the third valve, while the precipitated first medium (i.e. the precipitating food) can only exit through the product removal station, but not through the pig removal station, in particular through the third valve, and thus can only be obtained from the piping system at the product removal station, in particular the opening.

In a further embodiment, the system further comprises at least one cylinder stem configured to move the at least two pigs through the first and/or the second and/or the third valve, in particular wherein the at least one cylinder stem is configured to move the at least two pigs in a flow direction of the volumetric flow, in particular of the volumetric flow of the first medium, and/or the at least one cylinder stem is extendable into the piping system and configured to push the at least two pigs through the opened first and/or second and/or third valve.

This embodiment has the advantage that the pigs can be moved through the valves by means of cylinder stems (which can, for example, be adapted to the diameter of the pipeline and can thus move a medium in the pipeline without leaving any residue) in particular if the movement of a pig through a valve is not possible and/or undesirable at the corresponding location. For example, moving the pig over the opening of the product removal station only by means of a volume flow of the precipitated first medium in the pipeline could result in the pig being pushed over the opening, wherein after the precipitated first medium falls out of the piping system through the opening, it does no longer contribute to further movement of the pig through the third valve. In this case the cylinder stem can be used to push the pig further through the third valve. Furthermore, the cylinder stem (especially if adapted to the diameter of the pipeline) pushes the precipitated first medium (which is present, for example, in the form of precipitated flocs/agglomerates of flocs in brine/permeate) completely into the product removal station, especially through the opening, whereby the precipitated first medium can be completely removed from the piping system. Instead of the cylinder stem, any type of pusher/slide which is configured to move medium and pig through the pipeline, in particular by extending and retracting, can be used.

In a further embodiment, the system further comprises a product transport unit, in particular a conveyor belt, configured to further transport the precipitated first medium of defined quantity, in particular of defined volume and/or defined mass, removed from the product removal station, in particular wherein the product transport unit, in particular the conveyor belt, is arranged below the product removal station, in particular below the product removal station configured as the opening, and the precipitated first medium of defined quantity, in particular of defined volume and/or defined mass, falls by means of gravity from the product removal station, in particular the product removal station designed as the opening, onto the product transport unit, in particular the conveyor belt.

This embodiment has the advantage that the precipitated first medium (i.e. the precipitating food) removed from the product removal station can be transported away directly and continuously for further processing steps (e.g. filling and packaging). In this way, the continuous production process is not interrupted, the quantitative division into "batches" (e.g. the portioned quantity of the precipitated food product by means of the intermediate pig volume) is maintained and the cold chain can also be maintained.

The transport of the precipitated first medium by means of a perforated conveyor belt has the advantage that the precipitation brine/permeate (i.e. the supernatant in which the flocs of the precipitated first medium float) can flow off during the transport by conveyor belt, whereby only large pieces, i.e. agglomerated flocs of the precipitated first medium (e.g. cheese curd) can be transported on the conveyor belt.

In a further embodiment, the pig removal station further comprises a pig return pipeline configured to transport the at least two pigs back to the pig supply, in particular wherein the transport of the at least two pigs back to the pig supply is achievable by means of a transport medium, in particular a citric acid solution.

This embodiment has the advantage that already used pigs can be returned to the pig supply and thus be reused, whereby the continuous production process of the precipitating food can be carried out with a limited number of pigs. The use of a citric acid solution as transport medium has the advantage that the citric acid solution also cleans the already used pigs from residues of the used medium and the precipitating food and also sterilizes the pigs.

In a further embodiment, the system further comprises at least one sensor, wherein the at least one sensor is configured to determine at least one of the following:
- position of the at least two pigs,
- opening state of first and/or second and/or third valve,
- extending state of the at least one cylinder stem,
- volumetric flow, in particular volumetric flow of the first medium,
- volumetric flow of the precipitation medium,
- filling level of the intermediate pig volume,
- filling level of the intermediate lip volume,
- flow velocity of the at least two pigs,
- first distance,
- temperature of the precipitation pipeline and/or of the first medium,
- removal state of the precipitated first medium from the product removal station.

The volume of first medium filled into the intermediate pig volume can be determined, for example, based on the data from the sensor that determines the filling level of the intermediate pig volume, since this volume can be calculated based on the determined filling level of the intermediate pig volume. Other possibilities/detection systems to determine the amount or volume of first medium filled into the intermediate pig volume are: flow meter, mass flow meter, compensating/balancing cylinders, displacement pumps, piston pumps, volume counters or mass counters. Furthermore, the filling time can be determined for a constant volume flow of the first medium, which then allows the volume of first medium filled into the intermediate pig volume to be calculated. The above-mentioned possibilities can also be used to determine further volumes, for example the volume of the second medium filled into the intermediate lip volume.

This embodiment has the advantage that the entire production process can be monitored by the sensors (or the other detection systems named above), and thus the controller also receives the necessary information to control the pig supply and the media supply device in such a way that the at least two pigs are provided in the at least one pipeline with the defined first distance/spacing, and the first medium and the precipitation medium are provided at least in the intermediate pig volume. Optionally, the controller can be configured to control and coordinate further production steps, in particular all production steps.

The present invention further relates to a method according to claim 15 for continuous production of a precipitating food, in particular cheese and/or tofu, by precipitation of a first medium, in particular milk or other protein dispersions, of defined quantity, in particular of defined volume and/or defined mass, within a piping system, said method comprising the following steps:
- supplying at least two pigs into the piping system,
- filling a first medium, in particular milk or other protein dispersions, of defined quantity, in particular of defined volume and/or defined mass, and a precipitation medium in an intermediate pig volume, wherein the intermediate pig volume between the at least two pigs is defined by a defined first distance of the at least two pigs to each other and a defined pipeline diameter of the piping system, and
- moving the at least two pigs with defined first distance and filled intermediate pig volume through the piping system for a defined time, wherein in the defined time the precipitation of the first medium, in particular milk or other protein dispersions, of defined quantity, in particular of defined volume and/or defined mass, within the intermediate pig volume is providable so that the precipitating food, in particular cheese and/or tofu, is obtained with a desired degree of precipitation.

In a further embodiment, the at least two pigs are moved in the piping system by a volumetric flow, in particular by a volumetric flow of the first medium, flowing in the piping system.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figure 1 shows a schematic illustration of the piping system according to the invention with four pigs provided on the pig supply.
Figure 2 shows a schematic illustration of the piping system according to the invention with one pig provided in front of the first valve.
Figure 3 shows a schematic illustration of the piping system according to the invention with one pig provided in front of the first valve and a second pig provided between the first and second valve.
Figure 4 shows a schematic illustration of the piping system according to the invention, wherein the medium supply device has filled the first medium into the intermediate pig volume.
Figure 5 shows a schematic illustration of the piping system according to the invention with the product removal station.
Figure 6 shows a schematic illustration of the piping system according to the invention with the pig removal station and the pig return pipeline.

### DETAILED DESCRIPTION OF THE DRAWINGS

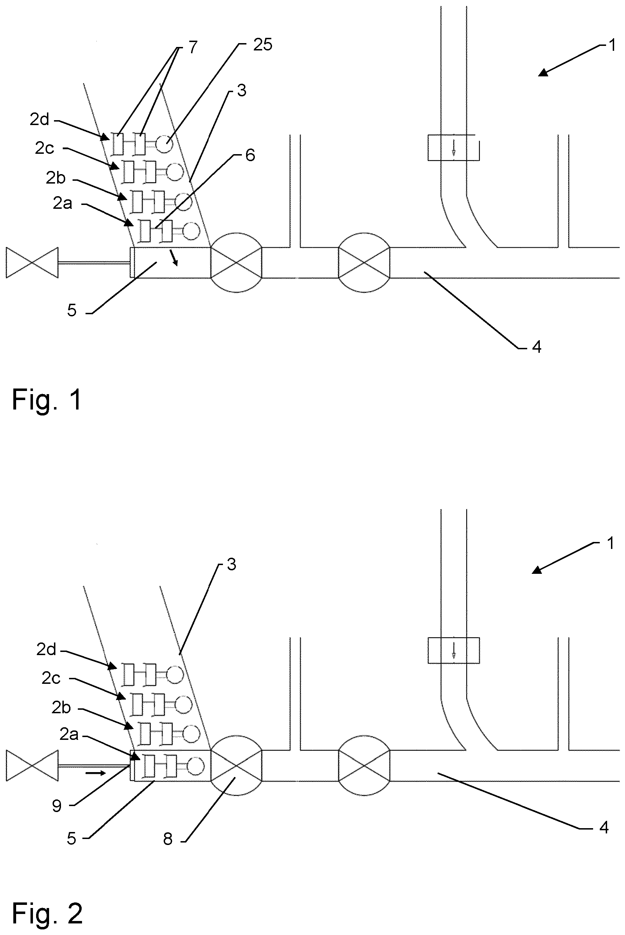

**Figure 1** shows a schematic illustration of the piping system 1 according to the invention with four pigs 2a,2b,2c,2d provided on the pig supply 3. In this exemplary embodiment of the piping system 1, the pig supply 3 is configured as a ramp on which four pigs 2a,2b,2c,2d are located, the ramp 3 having such a steep angle that the pigs 2a,2b,2c,2d slide or roll downwards in the direction of the pipeline 4, in particular in the direction of the pig receiver 5. Furthermore, the pig supply 3/the ramp 3 and the pigs 2a,2b,2c,2d can be flushed by means of a fluid flow, in particular a water flow, which is applied to the ramp 3 in the direction of the pipeline 4, in particular in the direction of the pig receiver 5. In this exemplary embodiment, the pig receiver 5 is formed as an opening in the pipeline 4 through which the pigs 2a,2b,2c,2d can slide into the pipeline 4. An exemplary pig 2 (the pigs 2 can be designed in any way known to the skilled person) has a pig body 6, which has a diameter smaller than the diameter of the pipeline 4, and two lips 7, wherein the two lips 7 extend radially from the pig body 6 and have a diameter such that the two lips 7 seal the pipeline 4. Further, the pig 2 has a round head 25 with a diameter smaller than the pipeline diameter, easing moving within the pipeline (straight and curves).

**Figure 2** shows a schematic illustration of the piping system 1 according to the invention with one pig 2a provided in front of the first valve 8. The pig 2a has been rolled (and/or flushed) down the ramp 3 and introduced into the pipeline 4 by means of the pig receiver 5, wherein it is now positioned in front of the first valve 8, wherein the first valve 8 separates the pig supply 3 from the rest of the piping system 1. By means of appropriate sensors (the sensors can, for example, be mounted in the pipeline 4 and detect a chip in the pig 2a or register the pig 2a optically, for example by means of a laser gate), the position of the pig 2a within the piping system 1 can be determined exactly, which enables the controller to open the first valve 8 exactly as soon as the pig 2a is positioned in front of the first valve 8.

The piping system 1 according to the invention shown in Figure 2 also has a cylinder stem 9, which is controlled by the controller in such a way that as soon as the first valve 8 is open, the cylinder stem 9 moves into the piping system 1 and thus presses the pig 2a through the opened first valve 8 into the pipeline 4. As soon as the pig 2a has been pushed through the opened first valve 8 by means of the extended cylinder stem 9, the cylinder stem 9 retracts again and the first valve 8 closes again as soon as the cylinder stem 9 has passed it again during retraction. As soon as the cylinder stem 9 has completely retracted and reached its initial position, another pig 2b moves into the pipeline 4 via the pig receiver 5 to the position in front of the first valve 8.

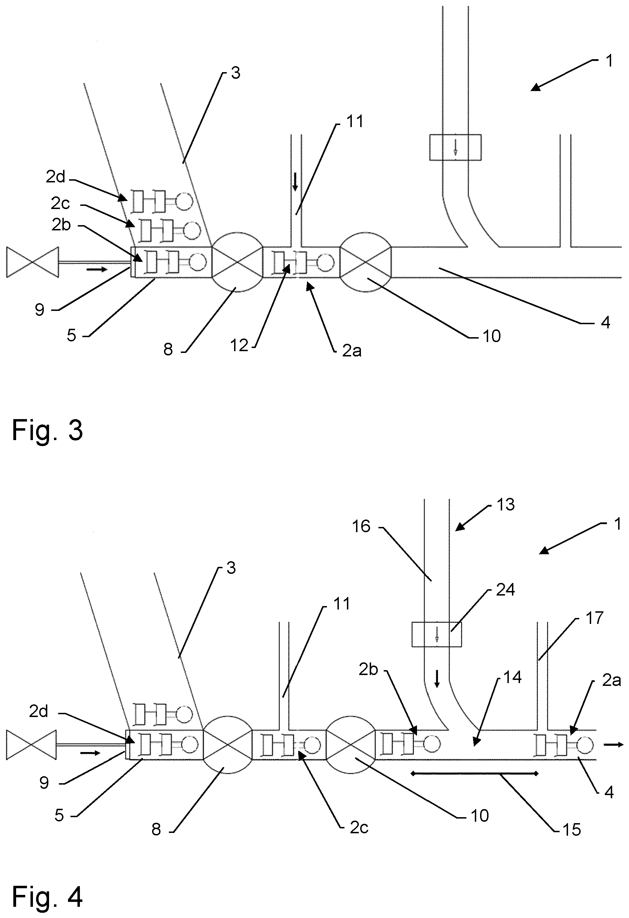

**Figure 3** shows a schematic illustration of the piping system 1 according to the invention with one pig 2b provided in front of the first valve 8 and a second pig 2a provided between the first and second valve 8,10. In this embodiment, the piping system 1 has a second valve 10 provided between the first valve 8 and the rest of the piping system 1. The pig 2a has been pushed through the opened first valve 8 (e.g. by means of the cylindrical stem 9) in front of the second valve 10 and is thus contained between the first and second valves 8,10. In front of the first valve 8 there is another pig 2b, which is moved through the opened first valve 8 (e.g. by means of the cylinder stem 9), as soon as by means of the first supply line 11 the second medium is introduced between the first and the second valve 8,10, in particular into the intermediate lip volume 12, and the pig 2a has been moved through the second valve 10, wherein the second valve 10 has been controlled by means of the controller to open as soon as the medium supply device 13 provided the defined quantity, in particular the defined volume and/or defined mass, of the first medium, in particular milk or other protein dispersions, into the pipeline 4.

**Figure 4** shows a schematic illustration of the piping system 1 according to the invention, wherein the medium supply device 13 has filled the first medium into the intermediate pig volume 14 of the two pigs 2a,2b. After the pig 2a has passed through the first valve 8, the intermediate lip volume 12 has been filled with the second medium up to the desired filling level and then the pig 2a has passed through the opened second valve 10 into the pipeline 4 after the medium supply device 13 provided the defined quantity, in particular the defined volume and/or defined mass, of the first medium, in particular milk or other protein dispersions, into the pipeline 4 by means of the second supply line 16.

The pig 2a passed the second supply line 16 and then the second supply line 16 provided the defined quantity, in particular the defined volume and/or defined mass, of the first medium, in particular milk or other protein dispersions, in the volume between the pig 2a and the second valve 10. After, on the one hand, this defined quantity, in particular the defined volume and/or the defined mass, of the first medium has been completely dispensed into the volume between the pig 2a and the second valve 10, or, on the other hand, a time has expired in which, at a constant volume or mass flow, the defined volume or the defined mass of the first medium is completely present in the volume between the pig 2a and the second valve 10, the controller controls the opening of the second valve 10 and the pig 2b, which was present between the first and second valves 8,10 (and in which the second medium was introduced into the intermediate lip volume), is moved through the opened second valve 10 (e.g. pushed by the following pig 2c).

In this way, the pigs 2a,2b are now present at the defined first distance 15, which together with the given pipeline diameter defines the intermediate pig volume 14, wherein the intermediate pig volume 14 has been filled with the defined amount, in particular the defined volume and/or the defined mass, of the first medium, in particular milk or other protein dispersions.

The system 1 further comprises a flow meter 24 that determines the volumetric flow (i.e. throughput/flow rate) of the first medium in the second supply line 16, wherein the controller controls the constant volumetric flow rate of the first medium based on the determination of the volumetric flow of the first medium by the flow meter 24.

While the intermediate pig volume 14 of the pigs 2a and 2b is filled with the first medium, another pig 2c has been placed between the first and the second valve 8,10 and another pig 2d has been positioned in front of the first valve 8 by means of the pig receiver 5. As soon as the two pigs 2a,2b (e.g. by the volume flow of the first medium) are further guided through the piping system 1, these two pigs 2c,2d also move up with the defined first distance spaced apart from each other and their intermediate pig volume is also filled with the first medium. In this way, there is a continuous process in which the first medium is periodically provided with the defined quantity, in particular defined volume and/or defined mass, and is passed through the piping system 1.

In the depicted embodiment, the piping system 1, in particular the medium supply device 13, has a third supply line 17, by means of which the precipitation medium is added to the intermediate pig volume 14 as soon as the two pigs 2a,2b (e.g. by the volume flow of the first medium) are further guided through the piping system 1 and the intermediate pig volume 14 passes the third supply line 17. In this way, the first medium of defined quantity, in particular of defined volume and/or defined mass, is precipitated within the intermediate pig volume 14, while the two pigs 2a,2b and thus also the intermediate pig volume 14 are continuously moved through the piping system 1 (e.g. by the volume flow of the first medium).

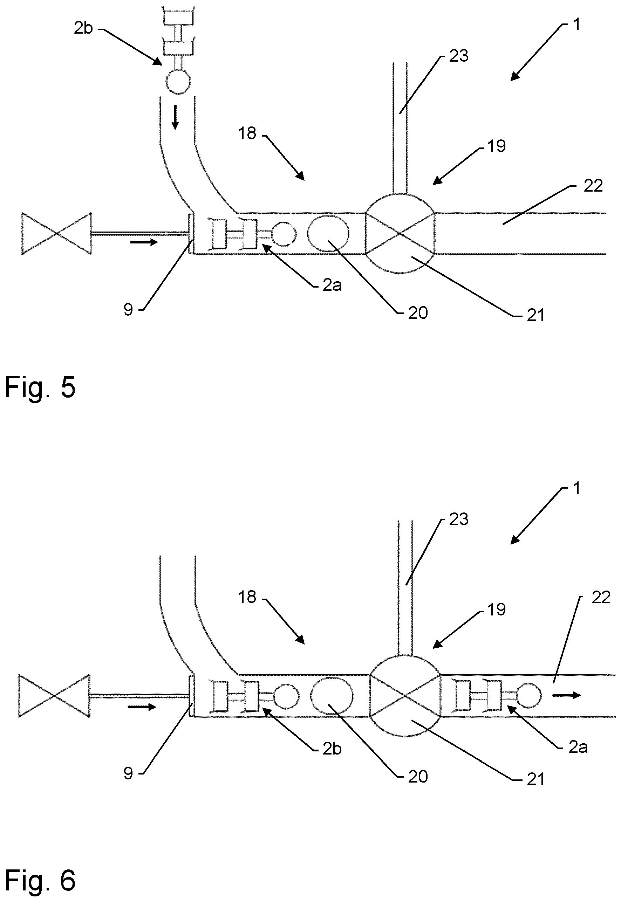

**Figure 5** shows a schematic illustration of the piping system 1 according to the invention with the product removal station 18. After the two pigs 2a,2b (and thus also the intermediate pig volume 14) have been moved continuously through the piping system 1 (e.g. by the volume flow of the first medium), wherein the flow velocity of the pigs 2a,2b, which can be adjusted for example by the volume flow of the first medium, has been selected in such a way that the time/duration that the two pigs 2a,2b and thus also the intermediate pig volume 14 filled with the first medium and the precipitation medium remain in the piping system 1 (e.g. also controllable by the length of the piping system 1) is so long that the precipitation reaction could take place completely, the two pigs 2a,2b (and thus also the intermediate pig volume 14 filled with the precipitated first medium) reach the product removal station 18.

First, the pig 2a is moved into the product removal station 18 (e.g. by the volume flow of the first medium) and there moved over the opening 20. Since the pig 2a is larger than the opening 20, it does not fall into the opening 20 but slides over it. The intermediate pig volume 14 filled with the precipitated first medium, which is located after the pig 2a, is also moved through the product removal station 18 by the movement of the pig 2a, whereby the precipitated first medium (e.g. by means of gravity) falls through the opening 20 (which is located at the bottom of the pipeline) and is thus removed from the piping system 1. Since through the opening 20 in the pipeline the pressure (which is exerted for example by the volume flow of the first medium on the pig 2a) is reduced/suddenly removed and the pig 2a is no longer moved through the pipeline due to the removal of this pressure, the product removal station 18 in the shown embodiment has a cylinder stem 9, which pushes the pig 2a by an extension movement into the pig removal station 19, which is arranged after the product removal station 18. After the cylinder stem 9 is completely retracted again (to its initial position) and the precipitated first medium (which is present, for example, in the form of precipitated flocs/agglomerates of flocs in brine/permeate) has been removed from the intermediate pig volume 14, the second pig 2b is moved into the product removal station 18 and then (e.g. by means of the cylinder stem 9) also into the pig removal station 19. Subsequently, further pigs 2, which have intermediate pig volumes 14 filled with precipitated first medium, are moved into the product removal station 18 (e.g. by the volume flow of the first medium), whereby the precipitated first medium can be removed from the piping system 1 in a continuous process.

It is particularly advantageous if the product removal station 18 is located higher (i.e. at a greater distance from the ground) than the preceding parts of the piping system 1 (e.g. the precipitation pipeline), so that the pipeline with the precipitated first medium/precipitated food product does not flow out unintentionally. Instead, the elevated product removal station 18 ensures that the precipitated first medium/precipitated food product is pushed forward only by the flow of first medium and the accompanying movement of the pigs, and thus the removal of the precipitated first medium/precipitated food product from the piping system 1 by means of the product removal station 18 is provided only on the basis of the (forced) flow of the first medium.

**Figure 6** shows a schematic illustration of the piping system 1 according to the invention with the pig removal station 19 and the pig return pipeline 22. In the depicted embodiment, the pig removal station 19 is configured as a third valve 21, wherein the controller controls the third valve 21 such that the third valve 21 opens as soon as the pig 2a is provided in front of the third valve 21. Subsequently, the pig 2a is moved through the opened third valve 21 (e.g. by means of the extended cylinder stem 9) and the controller controls the third valve 21 in such a way that the third valve 21 closes again as soon as the pig 2a has been moved through the third valve 21 (and the extended cylinder stem 9 has retracted from the third valve again). Subsequently, the controller controls the third valve 21 so that the third valve 21 opens again as soon as the pig 2b is provided in front of the third valve 21.

In the embodiment shown, the pig removal station 19 also has a pig return pipeline 22 with which the two pigs 2a,2b are transported back to the pig supply 3 (in order to ensure the reuse of the pigs and to provide continuous production.) and a fourth supply line 23 which provides an inflow of a transport medium, in particular a citric acid solution, into the pig removal station 19, wherein the transport medium transports the two pigs 2a,2b back to the pig supply 3 as soon as they have passed through the third valve 21.

The use of citric acid as a transport medium has the advantages that, firstly, it can already be used, for example, as a precipitation medium for the process, so it is not a problem in terms of ingredient list/food safety if some of it gets into the product, and secondly, the citric acid has a decalcifying effect. This helps to ensure that the pigs are cleaned after each production cycle. If they were not decalcified, the frictional resistance through the pipeline would become increasingly greater over time of production.

Although the invention is illustrated above, partly with reference to some preferred embodiments, it must be understood that numerous modifications and combinations of different features of the embodiments can be made. All of these modifications lie within the scope of the appended claims.

## Claims

1. Piping system (1) for continuous production of a precipitating food, in particular cheese and/or tofu, by precipitation of a first medium of defined quantity within the piping system (1), said system (1) comprising
• at least one pipeline (4) having a defined diameter,
• at least two pigs (2a,2b) configured to be moved in the at least one pipeline (4) by a volumetric flow flowing in the at least one pipeline (4),
• a pig supply (3), the pig supply (3) being configured to supply the at least two pigs (2a,2b) into the at least one pipeline (4),
• a medium supply device (13), the medium supply device (13) being configured to provide the first medium of defined quantity and a precipitation medium into the at least one pipeline (4), and
• a controller, the controller being configured to control the pig supply (3) and/or the medium supply device (13) so that
• the at least two pigs (2a,2b) are provided in the at least one pipeline (4) with a defined first distance (15) from one another, wherein an intermediate pig volume (14) between the at least two pigs (2a,2b) is defined by the defined first distance (15) and the defined pipeline diameter, and
• the first medium and the precipitation medium are provided at least in the intermediate pig volume (14),
wherein by means of the precipitation medium the precipitation of the first medium of defined quantity is providable at least in the intermediate pig volume (14).

2. The system (1) according to claim 1, wherein the controller is configured to provide a constant volumetric flow flowing in the at least one pipeline (4) such that the defined first distance (15) between the at least two pigs (2a,2b) is maintained, in particular wherein
• the system (1) further comprises at least one flow meter (24) configured to determine the volumetric flow in the at least one pipeline (4), and
• the controller is configured to provide the constant volumetric flow based on the determination of the volumetric flow by means of the flow meter (24).

3. The system (1) according to claim 1 or 2, wherein the precipitation of the first medium of defined quantity is provided at least in the intermediate pig volume (14), while the at least two pigs (2a,2b) move through the at least one pipeline (4) by means of the volumetric flow flowing in the at least one pipeline (4).

4. The system (1) according to claim 1, wherein the at least two pigs (2a,2b) each comprising
• a pig body (6) having a diameter smaller than the diameter of the at least one pipeline (4), and
• at least one lip (7), wherein the at least one lip (7) extends radially from the pig body (6) and has a diameter such that the at least one lip (7) seals the at least one pipeline (4) when present inside the pipeline (4).

5. The system (1) according to any of the preceding claims, wherein the at least two pigs (2a,2b) each comprising two lips (7), wherein the two lips (7) extend radially from the pig body (6) and have a diameter such that the two lips (7) seal the at least one pipeline (4) when present inside the pipeline (4), in particular wherein the two lips (7) have a defined second distance from one another, wherein an intermediate lip volume (12) is defined by the defined second distance and the defined pipeline diameter, in particular wherein the intermediate lip volume (12) is configured to be filled with a second medium of defined quantity.

6. The system (1) according to any of the preceding claims, wherein the system (1) further comprises a first valve (8) provided between the pig supply (3) and the at least one pipeline (4), wherein by means of the first valve (8) the introduction of the at least two pigs (2a,2b) with the defined first distance (15) into the at least one pipeline (4) is providable, in particular wherein the controller is configured to control the first valve (8) such that
• the first valve (8) opens as soon as
• one of the at least two pigs (2a,2b) is provided for being supplied into the at least one pipeline (4), and/or
• the medium supply device (13) provided the defined quantity, in particular the defined volume and/or defined mass, of the first medium into the at least one pipeline (4), in particular into the intermediate pig volume (14),
• the first valve (8) closes again as soon as the pig (2a) provided for being supplied into the at least one pipeline (4) has been moved through the opened first valve (8), and
• the first valve (8) opens again as soon as
• the medium supply device (13) provided the defined quantity, in particular the defined volume and/or defined mass, of the first medium into the at least one pipeline (4), in particular into the intermediate pig volume (14), and/or
• the further one of the at least two pigs (2b) is provided for being supplied into the at least one pipeline (4), and/or
• the distance between the at least two pigs (2a,2b) corresponds to the defined first distance (15).

7. The system (1) according to claim 6, wherein the system (1) further comprises
• a second valve (10) provided between the first valve (8) and the at least one pipeline (4), wherein the first and the second valve (8,10) are configured to be distanced in such a way that a pig (2a) is receivable between the first and the second valve (8,10), and
• a first supply line (11), wherein the first supply line (11) is configured to provide the second medium between the first and the second valve (8,10), in particular into the intermediate lip volume (12) of the pig (2a) which is received between the first and the second valve (8,10),
in particular wherein
• the controller is configured to control the second valve (10) such that the second valve (10) opens as soon as the medium supply device (13) provided the defined quantity, in particular the defined volume and/or defined mass, of the first medium into the at least one pipeline (4), in particular into the intermediate pig volume (14), and/or
• the pig (2a) filled with the second medium is configured to be moved through the opened second valve (10) into the at least one pipeline (4).

8. The system (1) according to claim 7, wherein the medium supply device (13) comprises a second supply line (16) configured to provide the first medium of a defined quantity into the intermediate pig volume (14), in particular wherein the second supply line (16) provides the first medium into the intermediate pig volume (14) after at least one of the at least two pigs (2a,2b) has been moved through the second valve (10).

9. The system (1) according to claim 7 or 8, wherein the medium supply device (13) comprises a third supply line (17) configured to provide the precipitation medium into the intermediate pig volume (14), in particular wherein the third supply line (17) provides the precipitation medium into the intermediate pig volume (14) after at least one of the at least two pigs (2a,2b) has been moved through the second valve (10).

10. The system (1) according to any one of the preceding claims, wherein the system (1) further comprises a precipitation pipeline, configured to provide a pipeline in which the at least two pigs (2a,2b) are movable for a defined time by means of the volumetric flow, wherein in the defined time the first medium of defined quantity precipitates within the intermediate pig volume (14), in particular wherein the precipitation pipeline is configured as a pipeline comprising at least one turn in order to provide an increased pipe length at a reduced volume, in particular wherein at least a part of the precipitation pipeline are surrounded by
• an insulation which is configured to keep the temperature of the precipitation line and thus also of the first medium of defined quantity constant, and/or
• a temperature regulator, wherein by means of the temperature regulator the precipitation pipeline and thus also the first medium of defined quantity is coolable and/or heatable.

11. The system (1) according to any one of the preceding claims, wherein the system (1) further comprises a product removal station (18) configured to provide removal of precipitated first medium of defined quantity from the piping system (1), in particular wherein the product removal station (18) is configured as an opening (20) in the at least one pipeline (4), wherein the opening (20) has a size
• from which the precipitated first medium of defined quantity is removable from the at least one pipeline (4), and
• which is smaller than the size of the at least two pigs (2a,2b), enabling the at least two pigs (2a,2b) to be moved across the opening (20) by means of the volumetric flow,
in particular wherein
• the opening (20) is provided at the bottom of the at least one pipeline (4), enabling the precipitated first medium to fall out of the at least one pipeline (4) by means of gravity, and/or
• the system (1) further comprises a fluid supply line configured to provide a fluid flow in the product removal station (18), wherein by means of the fluid flow the precipitated first medium of defined quantity is flushable through the opening (20).

12. The system (1) according to any one of the preceding claims, the system (1) further comprising a pig removal station (19) configured to provide removal of the at least two pigs (2a,2b) from the piping system (1), in particular wherein
• the pig removal station (19) is configured as a third valve (21), and
• the controller is configured to control the third valve (21) such that
• the third valve (21) opens as soon as one of the at least two pigs (2a) is provided for removal from the piping system (1), wherein the pig (2a) provided for removal from the piping system (1) is then movable through the opened third valve (21),
• the third valve (21) recloses as soon as the pig (2a) provided for removal from the piping system (1) has been moved through the opened third valve (21), and
• the third valve (21) reopens as soon as the further one of the at least two pigs (2b) is provided for removal from the piping system (1).

13. The system (1) according to any one of the preceding claims, wherein the system (1) further comprises at least one cylinder stem (9) configured to move the at least two pigs (2a,2b) through the first (8) and/or the second (10) and/or the third valve (21), in particular wherein
• the at least one cylinder stem (9) is configured to move the at least two pigs (2a,2b) in a flow direction of the volumetric flow, and/or
• the at least one cylinder stem (9) is extendable into the piping system (1) and configured to push the at least two pigs (2a,2b) through the opened first (8) and/or second (10) and/or third valve (21).

14. The system (1) according to any one of claims 11 to 13, wherein the system (1) further comprises a product transport unit configured to further transport the precipitated first medium of defined quantity removed from the product removal station (18), in particular wherein
• the product transport unit is arranged below the product removal station (18), in particular below the product removal station (18) configured as the opening (20), and
• the precipitated first medium of defined quantity falls by means of gravity from the product removal station (18), in particular the product removal station (18) designed as the opening (20), onto the product transport unit.

15. Method for continuous production of a precipitating food, in particular cheese and/or tofu, by precipitation of a first medium of defined quantity within a piping system (1), said method comprising the following steps:
• supplying at least two pigs (2a,2b) into the piping system (1),
• filling a first medium of defined quantity and a precipitation medium in an intermediate pig volume (14), wherein the intermediate pig volume (14) between the at least two pigs (2a,2b) is defined by a defined first distance (15) of the at least two pigs (2a,2b) to each other and a defined pipeline diameter of the piping system (1), and
• moving the at least two pigs (2a,2b) with defined first distance (15) and filled intermediate pig volume (14) through the piping system (1) for a defined time, wherein in the defined time the precipitation of the first medium of defined quantity within the intermediate pig volume (14) is providable so that the precipitating food, in particular cheese and/or tofu, is obtained with a desired degree of precipitation.

## Patentansprüche

1. Rohrsystem (1) für die kontinuierliche Herstellung eines ausgefällten Lebensmittels, insbesondere Käse und/oder Tofu, durch Fällung eines ersten Mittels in einer bestimmten Menge innerhalb des Rohrsystems (1), wobei das System (1) Folgendes aufweist:
• mindestens eine Rohrleitung (4) mit einem bestimmten Durchmesser,
• mindestens zwei Molche (2a, 2b), die dazu ausgelegt sind, durch einen Volumenstrom, der in der mindestens einen Rohrleitung (4) fließt, in der mindestens einen Rohrleitung (4) bewegt zu werden,
• eine Molchzufuhr (3), wobei die Molchzufuhr (3) dazu ausgelegt ist, die mindestens zwei Molche (2a, 2b) in die mindestens eine Rohrleitung (4) einzuführen,
• eine Mittelzufuhrvorrichtung (13), wobei die Mittelzufuhrvorrichtung (13) dazu ausgelegt ist, das erste Mittel in einer bestimmten Menge und ein Fällungsmittel in die mindestens eine Rohrleitung (4) zuzuführen, und
• eine Steuerung, wobei die Steuerung dazu ausgelegt ist, die Molchzufuhr (3) und/oder die Mittelzufuhrvorrichtung (13) derart zu steuern, dass
• die mindestens zwei Molche (2a, 2b) in einem bestimmten ersten Abstand (15) voneinander in die mindestens eine Rohrleitung (4) eingeführt werden, wobei ein Molch-Zwischenvolumen (14) zwischen den mindestens zwei Molchen (2a, 2b) durch den bestimmten ersten Abstand (15) und den bestimmten Rohrleitungsdurchmesser definiert wird, und
• das erste Mittel und das Fällungsmittel mindestens in dem Molch-Zwischenvolumen (14) bereitgestellt werden,
wobei mittels des Fällungsmittels die Fällung des ersten Mittels in bestimmter Menge zumindest in dem Molch-Zwischenvolumen (14) bereitgestellt werden kann.

2. System (1) nach Anspruch 1, wobei die Steuerung dazu ausgelegt ist, einen konstanten Volumenstrom, der in der mindestens einen Rohrleitung (4) fließt, bereitzustellen, derart, dass der bestimmte erste Abstand (15) zwischen den mindestens zwei Molchen (2a, 2b) beibehalten wird, insbesondere wobei
• das System (1) ferner mindestens ein Durchflussmessgerät (24) aufweist, das dazu ausgelegt ist, den Volumenstrom in der mindestens einen Rohrleitung (4) zu messen, und
• die Steuerung dazu ausgelegt ist, den konstanten Volumenstrom basierend auf der Bestimmung des Volumenstroms mittels des Durchflussmessgeräts (24) bereitzustellen.

3. System (1) nach Anspruch 1 oder 2, wobei die Fällung des ersten Mittels in bestimmter Menge mindestens in dem Molch-Zwischenvolumen (14) bereitgestellt wird, während sich die mindestens zwei Molche (2a, 2b) mittels des Volumenstroms, der durch die mindestens erste Rohrleitung (4) fließt, durch die mindestens eine Rohrleitung (4) bewegen.

4. System (1) nach Anspruch 1, wobei die mindestens zwei Molche (2a, 2b) jeweils Folgendes aufweisen:
• einen Molchkörper (6), der einen kleineren Durchmesser als der Durchmesser der mindestens einen Rohrleitung (4) aufweist, und
• mindestens einen Rand (7), wobei sich der mindestens eine Rand (7) radial von dem Molchkörper (6) erstreckt und einen solchen Durchmesser aufweist, dass der mindestens eine Rand (7) bei Vorhandensein in der Rohrleitung (4) die mindestens eine Rohrleitung (4) abdichtet.

5. System (1) nach einem der vorhergehenden Ansprüche, wobei die mindestens zwei Molche (2a, 2b) jeweils zwei Ränder (7) aufweisen, wobei sich die zwei Ränder (7) radial von dem Molchkörper (6) erstrecken und einen solchen Durchmesser aufweisen, dass die zwei Ränder (7) bei Vorhandensein in der Rohrleitung (4) die mindestens eine Rohrleitung (4) abdichten, insbesondere wobei die zwei Ränder (7) einen bestimmten zweiten Abstand voneinander aufweisen, wobei ein Randzwischenvolumen (12) durch den bestimmten zweiten Abstand und den bestimmten Rohrleitungsdurchmesser definiert wird, insbesondere wobei das Randzwischenvolumen (12) dazu ausgelegt ist, mit einem zweiten Mittel in einer bestimmten Menge gefüllt zu werden.

6. System (1) nach einem der vorhergehenden Ansprüche, wobei das System (1) ferner ein erstes Ventil (8) aufweist, das zwischen der Molchzufuhr (3) und der mindestens einen Rohrleitung (4) vorgesehen ist, wobei mittels des ersten Ventils (8) die Einführung der mindestens zwei Molche (2a, 2b) in dem bestimmten ersten Abstand (15) in die mindestens eine Rohrleitung (4) möglich ist, insbesondere wobei die Steuerung dazu ausgelegt ist, das erste Ventil (8) derart zu steuern, dass
• das erste Ventil (8) sich öffnet, sobald
• einer der mindestens zwei Molche (2a, 2b) zum Einführen in die mindestens eine Rohrleitung (4) vorgesehen ist, und/oder
• die Mittelzufuhrvorrichtung (13) die bestimmte Menge, insbesondere das bestimmte Volumen und/oder die bestimmte Masse, des ersten Mittels in die mindestens eine Rohrleitung (4), insbesondere in das Molch-Zwischenvolumen (14) zugeführt hat,
• das erste Ventil (8) sich wieder schließt, sobald sich der Molch (2a), der zur Einführung in die mindestens eine Rohrleitung (4) vorgesehen ist, durch das geöffnete erste Ventil (8) bewegt hat, und
• das erste Ventil (8) sich wieder öffnet, sobald
• die Mittelzufuhrvorrichtung (13) die bestimmte Menge, insbesondere das bestimmte Volumen und/oder die bestimmte Masse, des ersten Mittels in die mindestens eine Rohrleitung (4), insbesondere in das Molch-Zwischenvolumen (14) zugeführt hat, und/oder
• der weitere der mindestens zwei Molche (2b) zum Einführen in die mindestens eine Rohrleitung (4) bereitgestellt wird, und/oder
• der Abstand zwischen den mindestens zwei Molchen (2a, 2b) dem bestimmten ersten Abstand (15) entspricht.

7. System (1) nach Anspruch 6, wobei das System (1) ferner Folgendes aufweist:
• ein zweites Ventil (10), das zwischen dem ersten Ventil (8) und der mindestens einen Rohrleitung (4) vorgesehen ist, wobei das erste und das zweite Ventil (8, 10) dazu ausgelegt sind, derart beabstandet zu sein, dass ein Molch (2a) zwischen dem ersten und dem zweiten Ventil (8, 10) aufgenommen werden kann, und
• eine erste Zuleitung (11), wobei die erste Zuleitung (11) dazu ausgelegt ist, das zweite Mittel zwischen dem ersten und dem zweiten Ventil (8, 10) bereitzustellen, insbesondere in das Randzwischenvolumen (12) des Molchs (2a), der zwischen dem ersten und dem zweiten Ventil (8, 10) aufgenommen wird,
insbesondere, wobei
• die Steuerung dazu ausgelegt ist, das zweite Ventil (10) derart zu steuern, dass das zweite Ventil (10) sich öffnet, sobald die Mittelzufuhrvorrichtung (13) die bestimmte Menge, insbesondere das bestimmte Volumen und/oder die bestimmte Masse, des ersten Mittels in die mindestens eine Rohrleitung (4), insbesondere in das Molch-Zwischenvolumen (14), zugeführt hat, und/oder
• der Molch (2a), der mit dem zweiten Mittel befüllt ist, dazu ausgelegt ist, durch das geöffnete zweite Ventil (10) in die mindestens eine Rohrleitung (4) bewegt zu werden.

8. System (1) nach Anspruch 7, wobei die Mittelzufuhrvorrichtung (13) eine zweite Zuleitung (16) aufweist, die dazu ausgelegt ist, das erste Mittel in einer bestimmten Menge in das Molch-Zwischenvolumen (14) einzuführen, insbesondere wobei die zweite Zuleitung (16) das erste Mittel in das Molch-Zwischenvolumen (14) einführt, nachdem mindestens einer der mindestens zwei Molche (2a, 2b) durch das zweite Ventil (10) bewegt wurde.

9. System (1) nach Anspruch 7 oder 8, wobei die Mittelzufuhrvorrichtung (13) eine dritte Zuleitung (17) aufweist, die dazu ausgelegt ist, das Fällungsmittel in das Molch-Zwischenvolumen (14) einzuführen, insbesondere wobei die dritte Zuleitung (17) das Fällungsmittel in das Molch-Zwischenvolumen (14) einführt, nachdem mindestens einer der mindestens zwei Molche (2a, 2b) durch das zweite Ventil (10) bewegt wurde.

10. System (1) nach einem der vorhergehenden Ansprüche, wobei das System (1) ferner eine Fällungsrohrleitung aufweist, die dazu ausgelegt ist, eine Rohrleitung bereitzustellen, in der die mindestens zwei Molche (2a, 2b) mittels des Volumenstroms über einen bestimmten Zeitraum bewegt werden können, wobei während des bestimmten Zeitraums das erste Mittel in bestimmter Menge innerhalb des Molch-Zwischenvolumens (14) ausfällt, insbesondere wobei die Fällungsrohrleitung als eine Rohrleitung, die mindestens eine Wendung zum Vorsehen einer längeren Rohrlänge bei reduziertem Volumen aufweist, ausgelegt ist, insbesondere wobei mindestens ein Abschnitt der Fällungsrohrleitung von Folgendem umgeben ist:
• einer Isolierung, die dazu ausgelegt ist, die Temperatur der Fällungsleitung und dadurch auch des ersten Mittels einer bestimmten Menge konstant zu halten, und/oder
• einer Temperaturregulierungsvorrichtung, wobei die Fällungsrohrleitung und dadurch auch das erste Mittel einer bestimmten Menge mittels der Temperaturregulierungsvorrichtung gekühlt und/oder erwärmt werden kann.

11. System (1) nach einem der vorhergehenden Ansprüche, wobei das System (1) ferner eine Produktentfernungsstation (18) aufweist, die dazu ausgelegt ist, die Entfernung des ausgefällten ersten Mittels in einer bestimmten Menge aus dem Rohrsystem (1) bereitzustellen, insbesondere wobei die Produktentfernungsstation (18) als eine Öffnung (20) in der mindestens einen Rohrleitung (4) ausgelegt ist, wobei die Öffnung (20) eine Dimension aufweist,
• aus der das ausgefällte erste Mittel in bestimmter Menge aus der mindestens einen Rohrleitung (4) entfernt werden kann, und
• die kleiner als die Größe der mindestens zwei Molche (2a, 2b) ist, was ermöglicht, dass die mindestens zwei Molche (2a, 2b) mittels des Volumenstroms über die Öffnung (20) bewegt werden können,
insbesondere wobei
• die Öffnung (20) am Boden der mindestens einen Rohrleitung (4) vorgesehen ist, was emöglicht, dass das ausgefällte erste Mittel mittels Schwerkraft aus der mindestens einen Rohrleitung (4) fällt, und/der
• das System (1) ferner eine Fluidzuleitung aufweist, die dazu ausgelegt ist, einen Fluidstrom in der Produktentfernungsstation (18) bereitzustellen, wobei das ausgefällte erste Mittel in bestimmter Menge mittels des Fluidstroms durch die Öffnung (20) gespült werden kann.

12. System (1) nach einem der vorhergehenden Ansprüche, wobei das System (1) ferner eine Molchentfernungsstation (19) aufweist, die dazu ausgelegt ist, die Entfernung der mindestens zwei Molche (2a, 2b) aus dem Rohrsystem (1) bereitzustellen, insbesondere wobei
• die Molchentfernungsstation (19) als ein drittes Ventil (21) ausgelegt ist, und
• die Steuerung dazu ausgelegt ist, das dritte Ventil (21) derart zu steuern, dass
• das dritte Ventil (21) sich öffnet, sobald einer der mindestens zwei Molche (2a) zur Entfernung aus dem Rohrsystem (1) vorgesehen ist, wobei der Molch (2a), der zur Entfernung aus dem Rohrsystem (1) vorgesehen ist, dann durch das geöffnete dritte Ventil (21) bewegt werden kann,
• das dritte Ventil (21) sich wieder schließt, sobald der Molch (2a), der zur Entfernung aus dem Rohrsystem (1) vorgesehen ist, durch das geöffnete dritte Ventil (21) bewegt wurde, und
• das dritte Ventil (21) sich wieder öffnet, sobald der weitere der mindestens zwei Molche (2b) zur Entfernung aus dem Rohrsystem (1) vorgesehen ist.

13. System (1) nach einem der vorhergehenden Ansprüche, wobei das System (1) ferner mindestens einen Zylinderschaft (9) aufweist, der dazu ausgelegt ist, die mindestens zwei Molche (2a, 2b) durch das erste (8) und/oder das zweite (10) und/oder das dritte Ventil (21) zu bewegen, insbesondere wobei
• der mindestens eine Zylinderschaft (9) dazu ausgelegt ist, die mindestens zwei Molche (2a, 2b) in einer Strömungsrichtung des Volumenstroms zu bewegen, und/oder
• der mindestens eine Zylinderschaft (9) sich in das Rohrsystem (1) erstrecken kann und dazu ausgelegt ist, die mindestens zwei Molche (2a, 2b) durch das geöffnete erste (8) und/oder zweite (10) und/oder dritte Ventil (21) zu drücken.

14. System (1) nach einem der Ansprüche 11 bis 13, wobei das System (1) ferner eine Produkttransporteinheit aufweist, die dazu ausgelegt ist, das ausgefällte erste Mittel in bestimmter Menge, das aus der Produktentfernungsstation (18) entfernt wurde, weiter zu transportieren, insbesondere wobei
• die Produkttransporteinheit unterhalb der Produktentfernungsstation (18) angeordnet ist, insbesondere unterhalb der Produktentfernungsstation (18), die als die Öffnung (20) ausgelegt ist, und
• das ausgefällte erste Mittel in bestimmter Menge mittels Schwerkraft aus der Produktentfernungsstation (18) fällt, insbesondere aus der Produktentfernungsstation (18), die als die Öffnung (20) ausgelegt ist, und auf die Produkttransporteinheit.

15. Verfahren für die kontinuierliche Herstellung eines ausgefällten Lebensmittels, insbesondere Käse und/oder Tofu, durch Fällung eines ersten Mittels in einer bestimmten Menge innerhalb eines Rohrsystems (1), wobei das Verfahren die folgenden Schritte umfasst:
• Einführen mindestens zweier Molche (2a, 2b) in das Rohrsystem (1),
• Füllen eines ersten Mittels in bestimmter Menge und eines Fällungsmittels in ein Molch-Zwischenvolumen (14), wobei das Molch-Zwischenvolumen (14) zwischen den mindestens zwei Molchen (2a, 2b) durch einen bestimmten ersten Abstand (15) der mindestens zwei Molche (2a, 2b) zueinander und einen bestimmten Rohrleitungsdurchmesser des Rohrsystems (1) definiert ist, und
• Bewegen der mindestens zwei Molche (2a, 2b) mit bestimmtem ersten Abstand (15) und gefülltem Molch-Zwischenvolumen (14) durch das Rohrsystem (1) über einen bestimmten Zeitraum, wobei während des bestimmten Zeitraums die Fällung des ersten Mittels in bestimmter Menge innerhalb des Molch-Zwischenvolumens (14) derart bereitgestellt werden kann, dass das ausgefällte Lebensmittel, insbesondere Käse und/oder Tofu, mit einem gewünschten Ausfällungsgrad erhalten wird.

## Revendications

1. Système de tuyauterie (1) pour la production continue d'un aliment à précipitation, en particulier de fromage et/ou de tofu, par précipitation d'un premier fluide en quantité définie dans le système de tuyauterie (1), ledit système (1) comprenant
• au moins une conduite (4) ayant un diamètre défini,
• au moins deux racleurs (2a, 2b) configurés pour être déplacés dans l'au moins une conduite (4) par un flux volumétrique s'écoulant dans l'au moins une conduite (4),
• une alimentation en racleurs (3), l'alimentation en racleurs (3) étant configurée pour alimenter les au moins deux racleurs (2a, 2b) vers l'au moins une conduite (4),
• un dispositif d'alimentation en fluide (13), le dispositif d'alimentation en fluide (13) étant configuré pour fournir le premier fluide en quantité définie et un fluide de précipitation dans l'au moins une conduite (4), et
• un moyen de commande, le moyen de commande étant configuré pour commander l'alimentation en racleurs (3) et/ou le dispositif d'alimentation en fluide (13) de telle façon que
• les au moins deux racleurs (2a, 2b) sont disposés dans l'au moins une conduite (4) à une première distance définie (15) l'un de l'autre, dans lequel un volume intermédiaire entre racleurs (14) entre les au moins deux racleurs (2a, 2b) est défini par la première distance définie (15) et le diamètre de conduite défini, et
• le premier fluide et le fluide de précipitation sont présents au moins dans le volume intermédiaire entre racleurs (14),
dans lequel, au moyen du fluide de précipitation, la précipitation du premier fluide en quantité définie peut avoir lieu au moins dans le volume intermédiaire entre racleurs (14).

2. Système (1) selon la revendication 1, dans lequel le moyen de commande est configuré pour fournir un flux volumétrique constant s'écoulant dans l'au moins une conduite (4) de manière à maintenir la première distance définie (15) entre les au moins deux racleurs (2a, 2b), en particulier dans lequel
• le système (1) comprend en outre au moins un débitmètre (24) configuré pour déterminer le flux volumétrique dans l'au moins une conduite (4), et
• le moyen de commande est configuré pour fournir le flux volumétrique constant sur la base de la détermination du flux volumétrique au moyen du débitmètre (24).

3. Système (1) selon la revendication 1 ou 2, dans lequel la précipitation du premier fluide en quantité définie a lieu au moins dans le volume intermédiaire entre racleurs (14), tandis que les au moins deux racleurs (2a, 2b) se déplacent à travers l'au moins une conduite (4) au moyen du flux volumétrique s'écoulant dans l'au moins une conduite (4).

4. Système (1) selon la revendication 1, dans lequel les au moins deux racleurs (2a, 2b) comprennent chacun
• un corps de racleur (6) ayant un diamètre inférieur au diamètre de l'au moins une conduite (4), et
• au moins une lèvre (7), dans lequel l'au moins une lèvre (7) s'étend radialement à partir du corps de racleur (6) et présente un diamètre tel que l'au moins une lèvre (7) étanchéifie l'au moins une conduite (4) lorsqu'elle se trouve dans la conduite (4).

5. Système (1) selon l'une quelconque des revendications précédentes, dans lequel les au moins deux racleurs (2a, 2b) comprennent chacun deux lèvres (7), dans lequel les deux lèvres (7) s'étendent radialement à partir du corps de racleur (6) et ont un diamètre tel que les deux lèvres (7) étanchéifient l'au moins une conduite (4) lorsqu'elles se trouvent dans la conduite (4), en particulier dans lequel les deux lèvres (7) présentent une deuxième distance définie l'une par rapport à l'autre, dans lequel un volume intermédiaire entre lèvres (12) est défini par la deuxième distance définie et le diamètre de conduite défini, en particulier dans lequel le volume intermédiaire entre lèvres (12) est configuré pour être rempli avec un deuxième fluide en quantité définie.

6. Système (1) selon l'une quelconque des revendications précédentes, dans lequel le système (1) comprend en outre une première soupape (8) disposée entre l'alimentation en racleurs (3) et l'au moins une conduite (4), dans lequel l'introduction des au moins deux racleurs (2a, 2b) avec la première distance définie (15) dans l'au moins une conduite (4) peut être effectuée au moyen de la première soupape (8), en particulier dans lequel le moyen de commande est configuré pour commander la première soupape (8) de telle façon que
• la première soupape (8) s'ouvre dès que
• l'un des au moins deux racleurs (2a, 2b) est présent pour être alimenté dans l'au moins une conduite (4), et/ou
• le dispositif d'alimentation en fluide (13) a fourni la quantité définie, en particulier le volume défini et/ou la masse définie, du premier fluide dans l'au moins une conduite (4), en particulier dans le volume intermédiaire entre racleurs (14),
• la première soupape (8) se referme dès que le racleur (2a) présent pour être alimenté dans l'au moins une conduite (4) a été déplacé à travers la première soupape (8) ouverte, et
• la première soupape (8) se réouvre dès que
• le dispositif d'alimentation en fluide (13) a fourni la quantité définie, en particulier le volume défini et/ou la masse définie, du premier fluide dans l'au moins une conduite (4), en particulier dans le volume intermédiaire entre racleurs (14), et/ou
• l'autre des au moins deux racleurs (2b) est présent pour être alimenté dans l'au moins une conduite (4), et/ou
• la distance entre les au moins deux racleurs (2a, 2b) correspond à la première distance définie (15).

7. Système (1) selon la revendication 6, dans lequel le système (1) comprend en outre
• une deuxième soupape (10) disposée entre la première soupape (8) et l'au moins une conduite (4), dans lequel les première et deuxième soupapes (8, 10) sont configurées pour être séparées de manière à ce qu'un racleur (2a) puisse être reçu entre la première et la deuxième soupape (8, 10), et
• une première ligne d'alimentation (11), dans lequel la première ligne d'alimentation (11) est configurée pour fournir le deuxième fluide entre la première et la deuxième soupape (8, 10), en particulier dans le volume intermédiaire entre lèvres (12) du racleur (2a) reçu entre la première et la deuxième soupape (8, 10),
en particulier dans lequel
• le moyen de commande est configuré pour commander la deuxième soupape (10) de manière à ce que la deuxième soupape (10) s'ouvre dès que le dispositif d'alimentation en fluide (13) a fourni la quantité définie, en particulier le volume défini et/ou la masse définie, du premier fluide dans l'au moins une conduite (4), en particulier dans le volume intermédiaire entre racleurs (14), et/ou
• le racleur (2a) rempli avec le deuxième fluide est configuré pour être déplacé dans l'au moins une conduite (4) à travers la deuxième soupape (10) ouverte.

8. Système (1) selon la revendication 7, dans lequel le dispositif d'alimentation en fluide (13) comprend une deuxième ligne d'alimentation (16) configurée pour fournir le premier fluide en quantité définie dans le volume intermédiaire entre racleurs (14), en particulier dans lequel la deuxième ligne d'alimentation (16) fournit le premier fluide dans le volume intermédiaire entre racleurs (14) après le déplacement de l'un au moins des au moins deux racleurs (2a, 2b) à travers la deuxième soupape (10).

9. Système (1) selon la revendication 7 ou 8, dans lequel le dispositif d'alimentation en fluide (13) comprend une troisième ligne d'alimentation (17) configurée pour fournir le fluide de précipitation dans le volume intermédiaire entre racleurs (14), en particulier dans lequel la troisième ligne d'alimentation (17) fournit le fluide de précipitation dans le volume intermédiaire entre racleurs (14) après le déplacement de l'un au moins des au moins deux racleurs (2a, 2b) à travers la deuxième soupape (10).

10. Système (1) selon l'une quelconque des revendications précédentes, dans lequel le système (1) comprend en outre une conduite de précipitation configurée pour fournir une conduite dans laquelle les au moins deux racleurs (2a, 2b) sont déplaçables pendant un temps défini au moyen du flux volumétrique, dans lequel, dans le temps défini, le premier fluide en quantité définie précipite dans le volume intermédiaire entre racleurs (14), en particulier dans lequel la conduite de précipitation est configurée comme une conduite comprenant au moins un coude pour fournir une longueur de conduite augmentée à un volume réduit, en particulier dans lequel au moins une partie de la conduite de précipitation est entourée par
• une isolation configurée pour maintenir constante la température de la ligne de précipitation et donc également du premier fluide en quantité définie, et/ou
• un régulateur de température, dans lequel la conduite de précipitation et donc également le premier fluide en quantité définie peuvent être refroidis et/ou chauffés au moyen du régulateur de température.

11. Système (1) selon l'une quelconque des revendications précédentes, dans lequel le système (1) comprend en outre une station d'évacuation de produit (18) configurée pour assurer l'évacuation du premier fluide précipité en quantité définie à partir du système de tuyauterie (1), en particulier dans lequel la station d'évacuation de produit (18) est configurée comme une ouverture (20) dans l'au moins une conduite (4), dans lequel l'ouverture (20) présente une taille
• à partir de laquelle le premier fluide précipité en quantité définie peut être évacué de l'au moins une conduite (4), et
• laquelle est inférieure à la taille des au moins deux racleurs (2a, 2b), permettant aux au moins deux racleurs (2a, 2b) d'être déplacés à travers l'ouverture (20) au moyen du flux volumétrique,
en particulier dans lequel
• l'ouverture (20) est disposée au fond de l'au moins une conduite (4), permettant au premier fluide précipité de s'écouler hors de l'au moins une conduite (4) par la gravité, et/ou
• le système (1) comprend en outre une ligne d'alimentation en liquide configurée pour fournir un flux de liquide dans la station d'évacuation de produit (18), dans lequel le premier fluide précipité en quantité définie peut être chassé à travers l'ouverture (20) au moyen du flux de liquide.

12. Système (1) selon l'une quelconque des revendications précédentes, le système (1) comprenant en outre une station de retrait de racleurs (19) configurée pour permettre le retrait des au moins deux racleurs (2a, 2b) hors du système de tuyauterie (1), en particulier dans lequel
• la station de retrait de racleur (19) est configurée comme une troisième soupape (21), et
• le moyen de commande est configuré pour commander la troisième soupape (21) de telle façon que
• la troisième soupape (21) s'ouvre dès que l'un au moins des au moins deux racleurs (2a) est prêt à être retiré du système de tuyauterie (1), dans lequel le racleur (2a) prêt pour le retrait du système de tuyauterie (1) est ensuite déplaçable à travers la troisième soupape (21) ouverte,
• la troisième soupape (21) se referme dès que le racleur (2a) prêt pour le retrait du système de tuyauterie (1) a été déplacé à travers la troisième soupape (21) ouverte, et
• la troisième soupape (21) se réouvre dès que l'autre des au moins deux racleurs (2b) est prêt pour le retrait du système de tuyauterie (1).

13. Système (1) selon l'une quelconque des revendications précédentes, dans lequel le système (1) comprend en outre au moins une tige de vérin (9) configurée pour déplacer les au moins deux racleurs (2a, 2b) à travers la première (8) et/ou la deuxième (10) et/ou la troisième soupape (21), en particulier dans lequel
• l'au moins une tige de vérin (9) est configurée pour déplacer les au moins deux racleurs (2a, 2b) dans une direction d'écoulement du flux volumétrique, et/ou
• l'au moins une tige de vérin (9) est extensible dans le système de tuyauterie (1) et configurée pour pousser les au moins deux racleurs (2a, 2b) à travers la première (8) et/ou la deuxième (10) et/ou la troisième soupape (21) ouverte(s).

14. Système (1) selon l'une quelconque des revendications 11 à 13, dans lequel le système (1) comprend en outre une unité de transport de produit configurée pour transporter en outre le premier fluide précipité en quantité définie évacué de la station d'évacuation de produit (18), en particulier dans lequel
• l'unité de transport de produit est agencée sous la station d'évacuation de produit (18), en particulier sous la station d'évacuation de produit (18) configurée comme l'ouverture (20), et
• le premier fluide précipité en quantité définie s'écoule par gravité hors de la station d'évacuation de produit (18), en particulier de la station d'évacuation de produit (18) conçue comme l'ouverture (20), vers l'unité de transport de produit.

15. Procédé de production continue d'un aliment à précipitation, en particulier de fromage et/ou de tofu, par précipitation d'un premier fluide en quantité définie dans un système de tuyauterie (1), ledit procédé comprenant les étapes suivantes :
• alimentation d'au moins deux racleurs (2a, 2b) dans le système de tuyauterie (1),
• remplissage d'un premier fluide en quantité définie et d'un fluide de précipitation dans un volume intermédiaire entre racleurs (14), dans lequel le volume intermédiaire entre racleurs (14) entre les au moins deux racleurs (2a, 2b) est défini par une première distance définie (15) des au moins deux racleurs (2a, 2b) l'un par rapport à l'autre et par un diamètre de conduite défini du système de tuyauterie (1), et
• déplacement des au moins deux racleurs (2a, 2b) avec la première distance définie (15) et le volume intermédiaire entre racleurs (14) rempli à travers le système de tuyauterie (1) pour un temps défini, dans lequel, dans le temps défini, la précipitation du premier fluide en quantité définie dans le volume intermédiaire entre racleurs (14) peut être réalisée de manière à ce que l'aliment, en particulier le fromage et/ou le tofu, soit obtenu avec un degré souhaité de précipitation.
